(19) Europäisches Patentamt
European Patent Office
Office européen des brevets

(11) **EP 2 690 298 A1**

(12) **EUROPÄISCHE PATENTANMELDUNG**

(43) Veröffentlichungstag:
**29.01.2014 Patentblatt 2014/05**

(51) Int Cl.:
*F16C 33/80* *(2006.01)*    *F16J 15/16* *(2006.01)*

(21) Anmeldenummer: **12005385.5**

(22) Anmeldetag: **24.07.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **IMO Holding GmbH**
**91350 Gremsdorf (DE)**

(72) Erfinder: **Wegesin, Markus**
**91325 Adelsdorf/Aisch (DE)**

(74) Vertreter: **Küchler, Stefan**
**Patentanwalt**
**Färberstrasse 20**
**90402 Nürnberg (DE)**

Bemerkungen:
Geänderte Patentansprüche gemäss Regel 137(2) EPÜ.

(54) **Lippenlose Spaltdichtung**

(57) Die Erfindung betrifft eine lippenlose Spaltdichtung (1), beispielsweise als mitlaufender oder umlaufender Faltenbalg, zur Abdichtung eines zwischen gegeneinander verdrehbaren Körpern (2 ; 3) vorhandenen Lagerspaltes (12), insbesondere zur Abdichtung des Lagerspaltes (12) zwischen mindestens zwei gegeneinander verdrehbaren Ringe eines Wälzlagers oder Großwälzlagers oder einer Drehverbindung, beispielsweise einer Rollen-, Tonnen-, Zylinder-, Nadel-, Kegel- oder Kugeldrehverbindung oder gar eines Kombinationslagers oder gar eines Vierpunktlagers, gekennzeichnet durch mindestens einen Eindringansatz (20) zur jeweiligen Fixierung der Spaltdichtung (1) in einem der verdrehbaren Körper (2 ; 3) sowie mindestens ein Elastteil (13), welches je über einen Elastteil Ansatz (14) mit diesem Eindringansatz (20) im Körper verbunden ist sowie mindestens einen weiteren, insbesondere zur Fixierung in einem anderen Maschinenteil oder Element bestimmten, Eindringansatz (21).

Fig. 2

EP 2 690 298 A1

**Beschreibung**

Die Erfindung betrifft eine lippenlose Spaltdichtung gemäß den Patentansprüchen zur Abdichtung eines zwischen gegeneinander verdrehbaren Körpern vorhandenen Lagerspaltes, beispielsweise ausgeführt als, jedoch nicht beschränkt auf, mitlaufender oder umlaufender Faltenbalg, insbesondere zur Abdichtung des Lagerspaltes zwischen gegeneinander verdrehbaren Ringen eines Wälzlagers, Schwenktriebs oder einer Drehverbindung, beispielsweise einer Rollen-, Tonnen-, Zylinder-, Nadel-, Kegel- oder Kugeldrehverbindung oder gar eines Kombinationslagers oder gar eines Vierpunktlagers.

Im Einsatz befindliche Dichtungen für Drehverbindungen, Wälzlager, auch Großwälzlager, und Schwenktriebe sind in Ihrer Form und Ausgestaltung sehr unterschiedlich, obwohl der Anwendungsfall oft sehr ähnlich ist. Die Aufgabenstellung von solchen umlaufenden Dichtungsvorrichtungen besteht darin, die Drehverbindung, das Wälzlager oder den Schwenktrieb sicher gegen äußere Einflüsse, beispielsweise Feuchtigkeit, Flugsand oder Verunreinigungen beziehungsweise Schmutz, Fremdkörper, et cetera, zu schützen. Gleichzeitig muss die Dichtung Unterstützung dafür bieten, dass das Schmiermittel im Lager verbleibt beziehungsweise nur in geringen und definierten Mengen aus der Gesamtanordnung abgeführt wird. Sie muss also dem Innendruck des Lagers, beispielsweise herbeigeführt durch das Schmiermittel, in vertretbarem Maße standhalten können. Der Fachmann spricht von der Abdichtwirkung der Dichtung.

Nach dem Stand der Technik sind handelsübliche und im Einsatz befindliche Dichtungen für Drehverbindungen, Schwenktriebe und Wälzlager vulkanisierbar und bestehen aus elastischen kautschukartigen Werkstoffen, beispielsweise Viton, FPM, NBR, ECO, HNBR. Es können neben der Dichtung auch verstärkende und versteifende Elemente, beispielsweise Zugfederstränge, verwendet werden.

Den üblichen Dichtungsanordnungen nach dem Stand der Technik ist gemein, dass Sie in der Regel entweder einteilig oder mehrteilig ausgeführt sind, das bedeutet aus mindestens einer Dichtungskomponente bestehen. Sehr häufig werden verschiedene ringförmige Dichtungssträge in die Drehverbindung eingebracht oder in einem oder in mehreren Einstichen beziehungsweise Nuten im Vollmaterial der Drehverbindung oder an dem Schwenktrieb befestigt, sodass auf diese Weise eine Fixierung stattfindet. Die Fixierung geschieht dabei durch Einbringen des elastischen Dichtungsmateriales in eine im (metallischen) Vollmaterial der abzudichtenden Anordnung vorhandene Nut. Diese Nut wird gelegentlich als Einstichnut oder Formeinstich bezeichnet und ist eine Materialaussparung oder Ausnehmung entsprechend eines nutförmigen Ausnehmungsprofiles in mindestens einem der gegeneinander verdrehbaren Körper. Zumeist wird diese Nut durch spanende Bearbeitung infolge des sogenannten Einstichdrehens während der Fertigung der Drehverbindung, des Wälzlagers oder des Schwenktriebs erzeugt.

So beschreibt beispielsweise die EP 1920176 eine Anordnung zur Abdichtung einer sich drehenden Verbindung, bei der die Dichtungsanordnung aus etwa insgesamt mehr als vier einzelnen Komponenten besteht, die sich jeweils ringförmig erstrecken und in welcher der Dichtungsring an einem der sich drehenden Teile in oben vorgenannter Weise fixiert ist. Die DE 20203372 hingegen beschreibt unter Anderem eine Dichtungsanordnung für eine Drehlagerung, die aufgrund ihrer stark asymmetrischen Geometrie in Verbindung mit einem zusätzlichen Ringelement aus einem anderen Werkstoff eine gute Dichtungswirkung erreicht. Auch hier ist die stark asymmetrische Geometrie des Dichtungsprofils an einem der sich drehenden Teile in oben vorgenannter Weise fixiert. Die DE 102006053832 hingegen behandelt den Einsatz einer Anordnung zum Abdichten zweier gegeneinander verdrehbar Teile, die als zusätzliche Komponente eine Feder beziehungsweise ein Zugfederband verwendet, und in welcher der Dichtungsring an einem der sich drehenden Teile in oben vorgenannter Weise fixiert ist.

Diesen herkömmlichen Dichtungsgeometrien ist gemein, dass die Art der Fixierung sehr großen Einfluss hat auf die Abdichtwirkung der Dichtung hat. Häufig wird beobachtet, dass Dichtungen während des Betriebs, insbesondere nach längerer Betriebsdauer aus der Fixierung herausrutschen und somit ihrem Existenzzweck nicht mehr gerecht werden. Je besser die Fixierung der Dichtung oder Dichtungsanordnung wäre, desto geringer wäre die Chance des ungewünschten Verlusts der Dichtung.

Probleme herkömmlicher Dichtungsgeometrien für Spaltdichtungen werden auf der anderen Seite in der Praxis auch häufig durch Anordnung und Form der Dichtlippen hervorgerufen: Herkömmliche Spaltdichtungen, beispielsweise in Windenergieanlagen, verfügen über sperrende und auslassende Dichtlippen. Das Problem ist, dass durch Dichtlippen, beispielsweise betrachtend die auslassenden Dichtlippen, nicht nur Öl oder Schmiermittel vom Lager an die Außenwelt abgegeben werden kann ; es können auf dem gleichen Wege unter widrigen Umständen auch Verschmutzungen in das Lager- oder Laufbahnsystem eindringen. Populäre Verschmutzungspartikel sind hierbei der oben genannte Flugsand oder Verunreinigungen, aber auch Späne, Korrosionsmaterial, Abriebpartikel, et cetera.

Verschmutzungspartikel, welche in das Lager- oder Laufbahnsystem eingedrungen sind, sorgen häufig für schlechteren Betrieb des Lagers. Eine Häufung von Verschmutzungspartikeln im Lager- oder Laufbahnsystem kann darüber hinaus zu Schädigungen, Defekten oder gar Totalausfällen führen.

Zudem unterliegen herkömmliche Dichtlippen dem Verschleiß/ Abrieb: Da die herkömmlichen Dichtlippen zumeist an einem Körperteil fixiert sind, während sie am anderen Körperteil lose anliegen, erfährt die anliegende Dichtlippe nicht selten kontinuierliche Reibung und somit kontinuierlichen Abrieb. Je größer der Abrieb beziehungsweise der Verschleiß an einer solchen herkömmlichen Dichtlippe ist, desto geringer ist die originäre Dichtwirkung, desto größer wird die Wahrscheinlichkeit, dass Verschmutzungspartikel von Außen in das Lager eindringen. Dabei gilt nach dem aktuellem Stand der Technik, dass der Verschleiß oder der Abrieb zumeist signifikant in proportionalem Verhältnis zur Betriebszeit der Dichtlippe steht.

längerfristig gesehen schädigt der Abrieb also die Dichtwirkung. Eine gänzlich verschleißfreie Dichtlippe erscheint nach aktuellem Stand der Technik nicht realisierbar zu sein. Nicht selten werden herkömmliche Dichtungen, insbesondere in Großwälzlagem, daher als Verschleißteile angesehen, die nach gegebener Betriebszeit ausgetauscht werden müssen.

Ein Grund für die Tatsache, dass herkömmliche Dichtungen als Verschleißteile angesehen werden, sind die nicht verschleißfreien Dichtlippen, auch als Spaltlippen bezeichnet.

<u>Aufgabe / Erfindung:</u>

Aus diesem genannten Problem, als auch aus den Nachteilen bei herausrutschenden Dichtungen ergibt sich die die Erfindung initiierende Aufgabe, eine neuartige und wesentlich verbesserte Spaltabdichtung zur Abdichtung eines zwischen gegeneinander verdrehbaren Körpern vorhandenen Lagerspaltes zu schaffen, insbesondere zur Abdichtung des Lagerspaltes zwischen mindestens zwei gegeneinander verdrehbaren Ringe eines Wälzlagers oder Großwälzlagers oder eines Schwenktriebs oder einer Drehverbindung, beispielsweise einer Rollen-, Tonnen-, Zylinder-, Nadel-, Kegel- oder Kugeldrehverbindung oder gar eines Kombinationslagers oder gar eines Vierpunktlagers, welche die in der Praxis problembehafteten Dicht- oder Spaltlippen völlig entbehrt und welche vorteilhaft fixiert werden kann. Diese erfindungsgemäße Spaltdichtung soll für alle gängigen Großwälzlager und Wälzlager, beispielsweise in Windenergieanlagen, aber auch in Drehverbindungen, insbesondere in Momentenlagem, oder Schwenktrieben einsetzbar sein. Die Spaltdichtung soll in oder am Spalt eines Wälzlager- oder Drehverbindungsproduktes anzubringen sein und gute Abdichtwirkung erzielen.

Durch die vorliegende Erfindung soll die Funktion dadurch verbessert werden, dass durch die Geometrie der Dichtung ein Fettaustritt bzw. Fremdkörpereintritt vermindert wird. Durch entfall jeglicher Dichtlippen ist eine bessere Montagefreundlichkeit zu erwarten. Durch entfall jeglicher Dichtlippen wird die vorliegende. Lösung maßgeblich verschleißfester als bisher bekannte Dichtungslösungen und verbessert darüberhinaus die Servicefreundlichkeit.

Die Lösung gelingt insbesondere mit der erfindungsgemäßen Spaltdichtung gemäß der weiteren Beschreibung und gemäß den weiter unten beschriebenen Ansprüchen.

Erfindungsgemäß weist die Lösung eine lippenlose Spaltdichtung zur Abdichtung eines zwischen gegeneinander verdrehbaren Körpern vorhandenen Lagerspaltes auf, beispielsweise als ein an einem der verdrehbaren Körper fixierter und mitlaufender Faltenbalg, wobei der verdrehbare Körper einer der Ringe eines Wälzlagers oder einer Drehverbindung, beziehungsweise einer der Ringe eines Momentenlagers oder Schwentriebes ist. Das Lager ist dabei grundsätzlich als Rollen-, Tonnen-, Zylinder-, Nadel-, Kegel- oder Kugeldrehverbindung gar als Kombinationslagers oder Vierpunktlager ausgeprägt.

Diese lippenlose Spaltdichtung besteht gemäß der Lehre der Erfindung aus einem elastischen oder gummiartigen, oder auch aus kautschukartigen oder kautschukhaltigen Material, alternativ aus einem elastischen Material auf Polyurethanbasis, jedoch idealerweise aus vulkanisierbarem Material.

Beispielsweise ist als Materialwerkstoff für die lippenlose Spaltdichtung eines der handelsüblichen Dichtungsstoffgemische wie etwa Viton, FPM, NBR, ECO oder HNBR zu verwenden. Vorzugsweise jedoch besteht die erfindungsgemäße lippenlose Spaltdichtung überwiegend und im Wesentlichen aus technischen Elastomeren oder aus kautschukartigen oder Kautschukhaltigen Werkstoffen, wie etwa Nitrilkautschuk oder Fluorkautschuk oder gar aus (ggfs. hydriertem) AcrylnitrilButadien-Kautschuk oder in Spezialanwendungen gegebenenfalls auch aus Naturkautschuk. Der Matehalwerkstoff für die lippenlose Spaltdichtung ist vorzugsweise vulkanisierbar.

In allen Fällen ist die erfindungsgemäße Spaltdichtung mit mindestens einem gelenkigem Abschnitt ausgestaltet. Ferner weist diese lippenlose Spaltdichtung mindestens je einen Eindringansatz zur jeweiligen Fixierung dieser Spaltdichtung in je einem der verdrehbaren Körper auf.

Der genannte gelenkige Abschnitt kann idealerweise als ein sogenannter Elastteil ausgeprägt sein. Dieser Elastteil ist erfindungsgemäß über einen Befestigungsansatz mit dem Eindringansatz im verdrehbaren Körper, verbunden, in welchen die Spaltdichtung umlaufend fixiert werden kann, beispielsweise also in einem ersten von zwei gegeneinander verdrehbaren Ringen.

Ähnlich wie dieser Eindringansatz weist die erfindungsgemäße Spaltdichtung mindestens einen weiteren Eindringansatz auf der Gegenseite auf, den sogenannten Eindringansatz für Maschinenteil oder Element. Auch hier gilt, dass der Elastteil über einen Befestigungsansatz mit diesem Eindringansatz für Maschinenteil oder Element verbunden ist.

Der Eindringansatz für Maschinenteil oder Element dient insbesondere zur Fixierung der lippenlosen Spaltdichtung in einem anderen Maschinenteil oder Element. Dieses andere Maschinenteil oder Element ist vorzugsweise im Sinne der Erfindung der zweite der beiden gegeneinander verdrehbaren Körper.

Bezogen auf zwei gegeneinander verdrehbare Ringe ist also der Elastteil der lippenlosen Spaltrichtung auf der einen Seite via Befestigungsansatz im Ersten der beiden Ringe fixiert - und auf der Gegenseite via Befestigungsansatz in den Zweiten der beiden Ringe eingebracht - idealerweise mittels eines zusätzlichen Einsatzteiles.

Der Elastteil erfährt im Sinne der erfindungsgemäßen Benutzung der lippenlosen Spaltdichtung vergrößerte, teilweise erhebliche, Zug- und Dehnkräfte. Der Elastteil kann folglich und vorteilhafterweise zugverstärkt ausgeführt sein, etwa beispielsweise mittels Stahl- oder Kunststofffasem faserverstärkt ausgeführt sein, alternativ kann der Elastteil aber auch draht- oder fadenverstärkt ausgeführt sein.

In der Regel wird im Sinne der Erfindung ein zugverstärktes Materialgemisch verwendet werden, welches sich unter Umständen vom Materialgemisch des übrigen Dichtungsmateriales für die lippenlose Spaltdichtung unterscheidet. In einer weiteren Ausgestaltungsform der Erfindung bestehd die gesamte lippenlose Spaltdichtung aus demselben zugverstärkten Materialgemisch, sodass dieses Materialgemisch höheren Zug- oder Dehnbelastungen stand halten kann als bisherige, herkömmliche, Dichtungswerkstoffe.

Zurück kommend auf das zusätzliche Einsatzteil lässt sich im Sinne der Erfindung beschreiben, dass der jenseitige Eindringansatz, also jener Eindringansatz welcher beispielsweise in den Zweiten der beiden gegeneinander verdrehbaren Ringe eingebracht wird, in dieses Einsatzteil einstecken oder einpressen lässt. Auch eine form- oder kraftschlüssige Verbindung zwischen Einsatzteil und Eindringansatz ist denkbar und erfinderisch. In der idealen Ausprägungsform der Erfindung jedoch sind Eindringansatz und Einsatzteil stoffschlüssig - und somit weitestgehend untrennbar - miteinander verbunden, beispielsweise etwa geklebt oder vulkanisiert.

Im Ergebnis lässt sich nach erfolgter Montage der lippenloser Spaltdichtung inklusive des zugehörigen Einsatzteils jener Einsatzteil im zweiten der gegeneinander verdrehbaren Körper, also beispielsweise im Zweiten der beiden gegeneinander verdrehbaren Ringe, bewegen. Der Einsatzteil bewegt sich dabei in einer Kuhle, welche in diesen Zweiten der gegeneinander verdrehbaren Körper, also beispielsweise im Zweiten der beiden gegeneinander verdrehbaren Ringe, eingearbeitet ist. Diese Kuhle ist dabei als giesstechnisch eingearbeiteter Hohlraum oder spanend gefertigte Nut, altemativ auch als Mulde, Vertiefung oder Höhlung zu verstehen.

Betrachtet man den regulären Drehbetrieb der gegeneinander verdrehbaren Körper, so wird sich der Einsatzteil im Sinne der Erfindung relativ zum Zweiten der gegeneinander verdrehbaren Körper bewegen lassen, wobei es für den Sinn der Erfindung unerheblich ist, ob sich diese Relativbewegung mit konstanter Geschwindigkeit oder nicht konstanter Geschwindigkeit vollzieht.

Während des Drehbetriebs drehen sich beide gegeneinander verdrehbaren Körper relativ zueinander, und zwar in der Regel mit nicht zueinander gleichen Winkelgeschwindigkeiten. Der erste Körper drehe beispielsweise mit der Winkelgeschwindigkeit $\omega_2$. Der zweite Körper hingegen drehe beispielsweise mit der Winkelgeschwindigkeit $\omega_3$.

Während des Drehbetriebs wird sich im Sinne der Erfindung die lippenlose Spaltdichtung, da sie an einem Ersten der beiden verdrehbaren Körper fixiert ist, mit der exakt gleichen jeweiligen Winkelgeschwindigkeit (w) desjenigen Körpers drehen, in welchen die Spaltdichtung eingebracht ist. Gegenüber dem Zweiten der gegeneinander verdrehbaren Körper jedoch wird eine Relativbewegung zwischen lippenloser Spaltdichtung und diesem Körper stattfinden immer dann, wenn die jeweiligen Winkelgeschwindigkeiten (w) der beiden gegeneinander verdrehbaren Körper nicht gleich sind.

Immer dann, wenn die jeweiligen Winkelgeschwindigkeiten ($\omega$) der beiden gegeneinander verdrehbaren Körper nicht gleich sind gilt folglich:

$$\omega_2 = \omega_{\text{lippenlose Spaltdichtung}} \neq \omega_3$$

Da der oben beschriebene Einsatzteil im Idealfalle stoffschlüssig - und somit weitestgehend untrennbar - mit dem Eindringansatz für Maschinenteil oder Element verbunden ist, gilt auch immer dann, wenn die jeweiligen Winkelgeschwindigkeiten (w) der beiden gegeneinander verdrehbaren Körper nicht gleich sind:

$$\omega_2 = \omega_{\text{Einsatzteil}} \neq \omega_3$$

Um eine möglichst reibungslose und ideal gleitende Relativbewegung zwischen Einsatzeil und dem Zweiten der beiden gegeneinander verdrehbaren Ringe zu ermöglichen, kann die erfindungsgemäße lippenlose Spaltdichtung im Bereich zwischen Einsatzteil und dem Zweiten der beiden gegeneinander verdrehbaren Ringe eines oder mehrere Gleit,- Roll,- oder Reibelemente aufweisen. In einer alternativen und kostengünstigeren Ausgestaltungsform der vorliegenden Erfindung entbehrt der Zwischenraum zwischen Einsatzteil und dem verdrehbaren Körper sämtliche Gleit,- Roll,- oder Reibelemente.

Die möglichst reibungslose und ideal gleitende Relativbewegung zwischen Einsatzeil kann im Sinne der Erfindung erzeugt werden mittels Gleitbändem, beispielsweise Gleitbändem aus mineralischen Stoffen oder aus Kunststoffen oder Kunststoffen, oder mittels Gleitringen, beispielsweise Gleitringen aus Aluminium oder Stahl oder Graphit, oder gar mittels Nadellagerringen. Die Gleitbänder oder Gleitringe, können beispielsweise als Polytetrafluorethylen-Bänder oder Polytetrafluorethylen-Ringe, oder gar als Nadellagerringe ausgeführt sein. Die Abkürzung des Werkstoffes Polytetrafluorethylen lautet PTFE. Ein handelsüblicher Name ist beispielsweise Teflon.

Wesentliche Beachtung kommt der Montierbarkeit der Erfindung zugute: Um den Einsatzteil in den Zweiten der gegeneinander verdrehbaren Körper einbringen zu können, ist es Vorteilhaft, wenn jener Einsatzteil bei der Montage flexibel, also verformbar, ausgestaltet ist. Es hat sich als vorteilhaft herausgestellt, wenn der Einsatzteil folglich aus gummi- oder kautschukartigem Werkstoff gefertigt ist, vorzugsweise aus gummi- oder kautschukartigem Werkstoff gleicher Härte wie Elastteil oder Befestigungsansatz. In einer alternativen weiteren Ausgestaltung der Erfindung besteht der Einsatzteil aus gummi- oder kautschukartigem Werkstoff höherer Härte.

In einer weiterführenden, zukünftigen Ausgestaltung der Erfindung besteht der Einsatzteil aus einem Nichtgummi- oder Nichtkautschukartigem Werkstoff höherer Härte, beispielsweise aus einem dem Elastteil oder Befestigungsansatz gegenüber andersartigem Werkstoff höherer Härte, etwa beispielsweise aus Kunststoff oder aus Aluminium oder aus Stahl oder aus gar aus Graphit. Für das Einsatzteil besonders vorteilhaft ist hat sich auch ein technisches Kunststoffmaterial herausgestellt, welches vergleichsweise hohe Steifigkeit bei niedrigen Reibwerten und ausgezeichneten Eigenschaften hinsichtlich Dimensionsstabilität aufweist. Beispielsweise das Material Polyoxymethylen (POM), insbesondere POM-C. Das Einsatzteil kann aus POM, insbesondere aus POM-C, bestehen. Auch Polytetrafluorethylen besitzt ähnlich vorteilhafte Eigenschaften. Das Einsatzteil kann alternativ aus Polytetrafluorethylen bestehen, oder aber aus einer vorteilhaften Werkstoffkombination aus Polyoxymethylen und Polytetrafluorethylen.

Die erfindungsgemäße lippenlose Spaltdichtung kann vorteilhafter weise in einem gemeinsamen Herstellverfahren hergestellt werden, selbst wenn ihre Komponenten aus unterschiedlichen Materialien bestehen, beispielsweise können Elastteil oder Befestigungsansatz unterschiedlichen Materialien bestehen. Das gemeinsame Herstellverfahren ist ein Extrudierens von gleichen oder unterschiedlichen Materialien in einem gemeinsamen Extrusionswerkzeug.

Wesentliche Beachtung kommt der Tatsache der Erfindung zugute, dass die Erfindung gemäß der Aufgabenstellung nicht aus der Fixierung kann. Somit ist die Fixierung der Dichtung oder Dichtungsanordnung verbessert. Die Chance des ungewünschten Verlusts der Dichtung ist minimiert. Dies geschieht im Sinne der Erfindung dadurch, dass das Einsatzteil gegen axiales Herauslösen gesichert ist.

Diese Sicherung gegen axiales Herausrutschen geschieht zum Einen beispielsweise mittels von mindestens einem von Außen angebrachten oder anbringbaren Niederhaltemittel wie etwa Ringscheiben oder Ringplatten. Diese Niederhaltemittel können entweder formschlüssig, oder auch Kraftschlüssig am Körper befestigt werden, vorzugsweise mittels Befestigungsmitteln wie etwa Schrauben, Nieten, Bolzen.

Zum Zweiten geschieht die Sicherung gegen axiales Herausrutschen durch die Formgebung des Einsatzteiles: Dadurch, dass sich die Form dieses Einsatzteiles Befestigungsansatz hin verjüngt, wird schon alleine durch diese Formgebung ein axiales Herausrutschen des Einsatzteiles, und somit der daran verbundenen lippenlosen Spaltdichtung, verhindert. Idealerweise weist die Form des Einsatzteiles eine Vieleckform oder eine Trapezform, oder auch Halbrundform auf.

Weitere Merkmale, Eigenschaften, Vorteile und Wirkungen auf der Grundlage der Erfindung ergeben sich aus den folgenden Beschreibungen einer bevorzugten Ausführungsform der Erfindung, sowie weiteren vorteilhaften Ausgestaltungen der Erfindung, sowie anhand der Zeichnungen. Dabei zeigen:

Fig. 1    beispielhaft eine erfindungsgemäße lippenlose Spaltdichtung im Profilschnitt in eingebautem Zustand, welche mittels eines viereckförmigen Einsatzteiles im Zweiten verdrehbaren Körper fixiert ist

Fig. 2    ebenso beispielhaft eine erfindungsgemäße lippenlose Spaltdichtung im Profilschnitt in eingebautem Zustand, welche mittels eines trapezförmigen Einsatzteiles im Zweiten verdrehbaren Körper fixiert ist

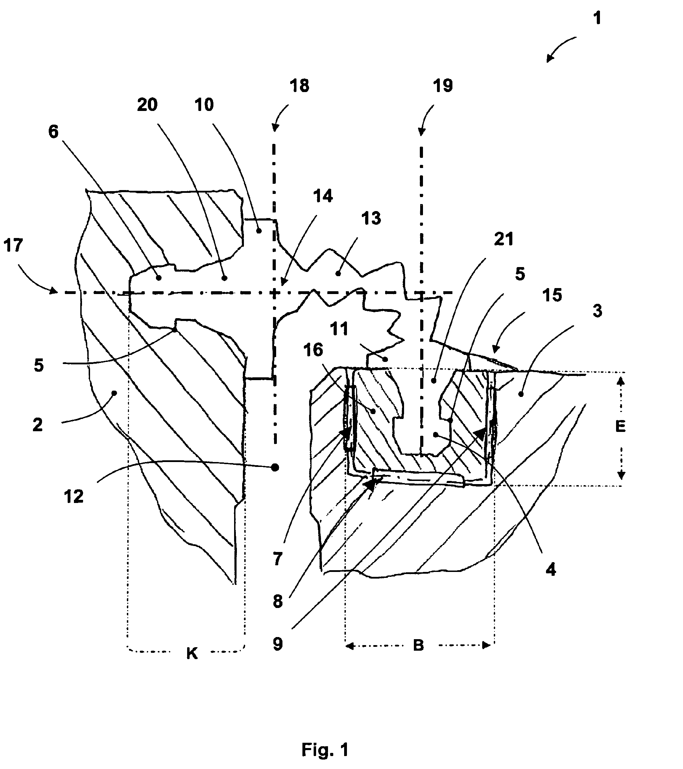

Fig. 1 zeigt eine lippenlose (1) Spaltdichtung zur Abdichtung eines zwischen gegeneinander verdrehbaren Körpern (2 ; 3) vorhandenen Lagerspaltes (12) auf, beispielsweise als ein an einem der verdrehbaren Körper fixierter und mitlaufender Faltenbalg. Diese lippenlose Spaltdichtung (1) besteht aus einem elastischen oder gummiartigen, oder auch aus kautschukartigen oder kautschukhaltigen Material. Die erfindungsgemäße Spaltdichtung (1) mit einem gelenkigem Abschnitt (13) ausgestaltet. Ferner weist diese lippenlose Spaltdichtung (1) mindestens je einen Eindringansatz (20 ; 21) zur jeweiligen Fixierung dieser Spaltdichtung in je einem der verdrehbaren Körper (2 ; 3) auf. Der gelenkige Abschnitt (13) ist dabei als Elastteil (13) ausgeprägt. Dieser Elastteil ist erfindungsgemäß über einen Befestigungsansatz (10 ; 14) mit dem Eindringansatz (20) im ersten (2) der verdrehbaren Körper (2 ; 3), verbunden. In diesem ersten (2) Körper in welchen die erfindungsgemäße Spaltdichtung (1) umlaufend fixiert ist, wird sie mittels Querschnittsverbreiterungen oder ,Widerhaken' (5) am Dichtungsfuß (4) gehalten.

Ähnlich wie der erste Eindringansatz (20) weist die erfindungsgemäße Spaltdichtung (1) auf der Gegenseite einen weiteren Eindringansatz (21) auf, den sogenannten Eindringansatz für Maschinenteil oder Element (21). Auch hier gilt, dass der Elastteil über einen Befestigungsansatz (11) mit diesem Eindringansatz für Maschinenteil oder Element (21) verbunden ist.

Der Eindringansatz für Maschinenteil oder Element (21) dient zur Fixierung der lippenlosen Spaltdichtung in einem anderen Maschinenteil oder Element (16 ; 3).

Dieses andere Maschinenteil oder Element (16 ; 3) ist vorzugsweise im Sinne der Erfindung der zweite der beiden gegeneinander verdrehbaren Körper (3). Beispielsweise kann jedoch der Eindringansatz (21) direkt in den Zweiten verdrehbaren Körper (3) eingebracht werden, um dort gleitend gelagert seine Dichtwirkung erzielen zu können.

Bezogen auf zwei gegeneinander verdrehbare Ringe ist der Elastteil (13) der lippenlosen Spaltdichtung (1) auf der einen Seite via Befestigungsansatz (10) im Ersten der beiden Ringe (2) fixiert - und auf der Gegenseite via Befestigungsansatz (11) in den Zweiten der beiden Ringe (3) eingebracht - wie in Fig. 1 erkennbar ist mittels eines zusätzlichen Einsatzteiles (16).

Der Elastteil (13) kann zugverstärkt ausgeführt sein, etwa beispielsweise mittels Stahl- oder Kunststofffasern faserverstärkt ausgeführt sein. In Fig. 1 dargestellt ist eine bereits montierte Anordnung der lippenlosen Spaltdichtung (1) inklusive des zugehörigen Einsatzteils (16). Der Einsatzteil bewegt sich dabei in einer Kuhle (24), welche in diesen Zweiten der gegeneinander verdrehbaren Körper (3) eingearbeitet ist. Diese Kuhle ist in Fig. 1 als spanend gefertigte Nut ausgeprägt.

Während des Drehbetriebs drehen sich beide gegeneinander verdrehbaren Körper (2 ; 3) relativ zueinander, und zwar in der Regel mit nicht zueinander gleichen Winkelgeschwindigkeiten, d.h. mit $W_2$ und $W_3$. Dann, wenn die jeweiligen Winkelgeschwindigkeiten der beiden gegeneinander verdrehbaren Körper nicht gleich sind gilt folglich: $w_2 = W_{lippenlose \; Spaltdichtung \; (1)} = \omega_{Einsatzteil \; (16)} \neq \omega_3$

Fig. 1 offenbart, dass, um eine möglichst reibungslose und ideal gleitende Relativbewegung zwischen Einsatzeil (16) und dem Zweiten der beiden gegeneinander verdrehbaren Ringe (3) zu gewährleisten, mehrere Gleit,- Roll,- oder Reibelemente (7 ; 8 ; 9) zwischen Einsatzteil (16) und dem zweiten Körper (3) eingebracht sind.

In Fig. 1 werden beispielsweise umlaufende Gleitringe (7 ; 8 ; 9) aus Aluminium verwendet.

Beispielsweise beträgt in Fig. 1 die axiale Eindringtiefe (K) des Einsatzteiles bis zu 20 mm, Beispielsweise beträgt die axiale oder vertikale Ersteckung (E) des Einsatzteiles bis zu 20 mm, während die horizontale Erstreckung (B) des Einsatzteiles ebenfalls bis zu 20 mm betragen kann. Abweichungen von diesen Maßen sind klar zulässig und stark abhängig von der Größe des abzudichtenden Spaltes (12) und von der Größe der Durchmesser der Körper (2 ; 3). Grundsätzlich gilt: Je geringer die Erstreckungen bzw. Eindringtiefen gefertigt werden müssen, desto weniger Aufwand bedeutet das Montieren der erfindungsgemäßen Anordnung. Der Spalt oder Lagerspalt (12) kann grundsätzlich etwa zwischen 0.5 mm und 20 mm betragen.

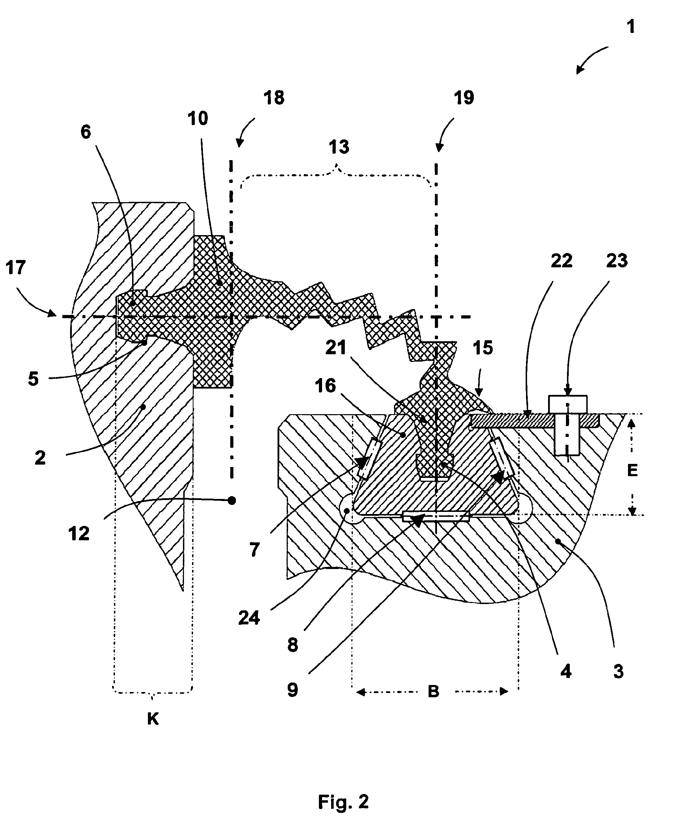

In Fig. 2 wird grundsätzlich das Gleicher Prinzip wie in Fig. 1 gezeigt. Jedoch sind in Fig. 2 die weiteren und vorteilhaften Sicherungsmittel gegen axiales Herausrutschen der erfindungsgemäßen Anordnung (1) dargestellt. So zeigt auch Fig. 2 beispielhaft eine lippenlose (1) Spaltdichtung zur Abdichtung eines zwischen gegeneinander verdrehbaren Körpem (2 ; 3) vorhandenen Lagerspaltes (12). Die erfindungsgemäße Spaltdichtung (1) mit einem gelenkigem Abschnitt (13) ausgestaltet. Ferner weist diese lippenlose Spaltdichtung (1) mindestens je einen Eindringansatz (20 ; 21) zur jeweiligen Fixierung dieser Spaltdichtung in je einem der verdrehbaren Körper (2 ; 3) auf. Der gelenkige Abschnitt (13) ist dabei als Elastteil (13) ausgeprägt.

Besonders vorteilhaft gestaltet sich, wenn der Elastteil (13) möglichst mit der horizontalen Achse (17) fluchtend angespritzt ist, um eine möglichst gleichmäßige Übertragung der Dehn-/ Zugkräfte, welche der Elastteil (13) während des Betriebes erleben kann, auf den Befestigungsansatz (10) und somit auf den Eindingansatz )20) im Körper (2) zu gewährleisten.

Auch auf der Gegenseite empfiehlt sich, wenn der Elastteil (13) möglichst mit der Achse (19) fluchtend angespritzt ist. Dieser Elastteil ist erfindungsgemäß über einen Befestigungsansatz (10 ; 14) mit dem Eindringansatz (20) im ersten (2) der verdrehbaren Körper (2 ; 3), verbunden. In diesem ersten (2) Körper in welchen die erfindungsgemäße Spaltdichtung (1) umlaufend fixiert ist, wird sie mittels Querschnittsverbreiterungen oder 'Widerhaken' (5) am Dichtungsfuß (4) gehalten. Besonders vorteilhafter Betrieb stellt sich hinsichtlich der Bewegungsfreiheitsgrade der Dichtung (1) dann ein, wenn der Eindringansatz (21) der Dichtung (1) am Zweiten Körper oder Element (3 ; 16) möglichst senkrecht zum Eindringansatz (20) der Dichtung (1) am Ersten Körper (2) orientiert ist. Dann ist die Einbringungsachse (19) am zweiten Körper (3) möglichst orthogonal zur Einbringungsachse (17) am ersten Körper (2) beziehungsweise möglichst parallel zur Achse (18), welche die Erstreckung des Befestigungsansatzes (10) am ersten Körper (2) limitiert.

Die Sicherung gegen axiales Herausrutschen geschieht in Fig. 2 zum Einen beispielsweise mittels von mindestens einem von Außen angebrachten oder anbringbaren Niederhaltemittel (22) wie etwa flachen Aluminiumringscheiben oder Ringplatten. Diese Niederhaltemittel (22) werden in Fig. 2 zusätzlich mittels Befestigungsmitteln wie etwa Schrauben (23) am Körper (3) befestigt.

Zum Zweiten geschieht in Fig. 2 die Sicherung gegen axiales Herausrutschen durch die Formgebung des Einsatzteiles (16). Dadurch, dass sich die Form dieses Einsatzteiles Befestigungsansatz hin verjüngt, wie dargestellt in Richtung Außenfläche des Körpers (3) verjüngt, wird schon durch diese vorteilafte Formgebung ein axiales Herausrutschen des Einsatzteiles (16), und somit der daran verbunden lippenlosen Spaltdichtung (1), verhindert. In Fig. 2 weist die Form des Einsatzteiles (16) eine Trapezform auf.

Auch in Fig. 2 sind Gleit,- Roll- oder Reibelemente (7 ; 8 ; 9) dargestellt, in diesem Fall als mehrere aneinendergelagerte Nadellagerelemente (7 ; 8 ; 9). In Fig. 2 kann auch aus Kostengründen auf die Gleit,- Roll- oder Reibelemente (7 ; 8 ; 9) verzichtet werden, sodass der Einsatzteil (16) direkt mit dem Zweiten verdrehbaren Körper (3) kontaktiert und zu diesem relativ beweglich ist.

Im Falle des Verzichtes auf diese Gleit,- Roll- oder Reibelemente (7 ; 8 ; 9) können die dadurch werdenden Freiräume zwischen Körper (3) und Einsatzteil (16) mit zusätzlichem Schmiermittel befüllt werden, sodass idealerweise die Kuhle (24) stark mit Schmiermittel befüllt ist.

Bezugszeichenliste:

| | |
|---|---|
| (1) | Lippenlose Spaltdichtung |
| (2) | Erster verdrehbarer Körper |
| (3) | Zweite verdrehbarer Körper |
| (4) | Dichtungsfuß |
| (5) | Querschnittsverbreiterung oder Widerhaken |
| (6) | Dichtungsfuß |
| (7) | Gleit,- Roll- oder Reibelement |
| (8) | Gleit,- Roll- oder Reibelement |
| (9) | Gleit,- Roll- oder Reibelement |
| (10) | Befestigungsansatz |
| (11) | Befestigungsansatz |
| (12) | Lagerspalt |
| (13) | Elastteil |
| (14) | Elastteil Ansatz |
| (15) | Schutzfuß |
| (16) | Einsatzteil |
| (17) | Achse |
| (18) | Achse |
| (19) | Achse |
| (20) | Eindringansatz Körper |
| (21) | Eindringansatz Maschinenteil oder Element |
| (22) | Niederhaltemittel |
| (23) | Befestigungsmittel |
| (24) | Kuhle |
| (E) | vertikale Erstreckung des Einsatzes |
| (B) | horizontale Erstreckung des Einsatzes |
| (K) | Eindringtiefe |
| ($\omega_2$) | Winkelgeschwindigkeit erster Körper |
| ($\omega_3$) | Winkelgeschwindigkeit zweiter Körper |

**Patentansprüche**

1. Lippenlose Spaltdichtung (1), beispielsweise als ein an einem Körper (2 ; 3) fixierter und mitlaufender Faltenbalg, vorzugsweise als Spaltdichtung mit mindestens einem gelenkigem Abschnitt, zur Abdichtung eines zwischen gegeneinander verdrehbaren Körpern (2 ; 3) vorhandenen Lagerspaltes (12), insbesondere zur Abdichtung des Lagerspaltes (12) zwischen mindestens zwei gegeneinander verdrehbaren Ringen eines Wälzlagers oder Großwälzlagers oder eines Schwenktriebes oder einer Drehverbindung, beispielsweise einer Rollen-, Tonnen-, Zylinder-, Nadel-, Kegel- oder Kugeldrehverbindung oder gar eines Kombinationslagers oder gar eines Vierpunktlagers.

2. Lippenlose Spaltdichtung (1) nach Anspruch 1 , aufweisend: mindestens einen Eindringansatz (20) zur jeweiligen Fixierung der Spaltdichtung (1) in einem der verdrehbaren Körper (2 ; 3) sowie mindestens ein Elastteil (13), welches je über einen Elastteil Ansatz (14) mit diesem Eindringansatz (20) im Körper verbunden ist sowie mindestens einen weiteren, insbesondere zur Fixierung in einem anderen Maschinenteil oder Element bestimmten, Eindringansatz (21).

3. Lippenlose Spaltdichtung (1) nach Anspruch 1 oder 2 **gekennzeichnet dadurch, dass** zumindest der Elastteil (13) zugverstärkt ausgeführt ist, beispielsweise faserverstärkt ausgeführt ist, alternativ draht- oder fadenverstärkt ausgeführt ist, gegebenenfalls auch aus einem gegenüber den Eindringansätzen (20 ; 21) zugverstärkten Materialgemisch ausgeführt ist.

4. Lippenlose Spaltdichtung (1) nach Anspruch 1 oder 2 **gekennzeichnet dadurch, dass** zumindest einer, vorzugsweise zwei, Eindringansatz (20) die Spaltdichtung an einem der verdrehbaren Körper (2) fixiert und ein weiterer Eindringansatz (21) die Spaltdichtung an einem dem Spalt (12) gegenüber liegendem verdrehbaren Körper (3) fixiert.

5. Lippenlose Spaltdichtung (1) nach Anspruch 1 bis 4 **gekennzeichnet dadurch, dass** der weitere Eindringansatz (21) die Spaltdichtung (1) an einem dem Spalt (12) gegenüber liegendem verdrehbaren Körper (3) fixiert, beispielsweise wobei dieser weitere Eindringansatz (21) in ein Einsatzteil (16) steckbar ist, welches sich gegenüber diesem Körper (3) relativ, gegebenenfalls unter Ausnutzung mindestens einer umlaufenden Kuhle (24), bewegen lässt, wobei diese Kuhle (24) ein giesstechnisch eingearbeiteter Hohlraum oder eine spanend gefertigte Nut ist, alternativ auch in Form einer Mulde, Vertiefung, oder Höhlung.

6. Lippenlose Spaltdichtung (1) nach Anspruch 1 bis 5 **gekennzeichnet dadurch, dass** sich das Einsatzteil (16) gegenüber dem Körper (3) in welchen es eingebracht oder einbringbar ist verdrehen lässt, wobei eines oder mehrere Gleit,- Roll,- oder Reibelemente (7 ; 8 ; 9) zwischen Einsatzteil (16) und Körper (3) eingebracht sein können, alternativ wobei der Zwischenraum zwischen Einsatzteil (16) und Körper (3) sämtlichen Gleit,- Roll,- oder Reibelemente (7 ; 8 ; 9) entbehrt.

7. Lippenlose Spaltdichtung (1) nach Anspruch 1 oder 2 **gekennzeichnet dadurch, dass** die Spaltdichtung im Wesentlichen besteht aus einem kautschukartigen oder kautschukhaltigen Material, alternativ aus einem elastischen Material auf Polyurethanbasis oder aus einem technischen Elastomer, idealerweise jedoch aus vulkanisierbarem Material, beispielsweise aus Viton, FPM, NBR, ECO, HNBR.

8. Lippenlose Spaltdichtung (1) nach Anspruch 1 **gekennzeichnet dadurch, dass** sich während Verdrehbewegungen beider gegeneinander verdrehbarer Körper (2 ; 3) die Spaltdichtung (1) mit der Winkelgeschwindigkeit ($\omega_2$ ; $\omega_3$) des Körpers dreht, in welchen die Spaltdichtung (1) mittels Eindringansatz (20) eingebracht ist.

9. Lippenlose Spaltdichtung (1) nach Anspruch 1 bis 6 oder nach Anspruch 8 **gekennzeichnet dadurch, dass** sich während Verdrehbewegungen beider gegeneinander verdrehbarer Körper (2 ; 3) das jeweilige Einsatzteil (16) mit anderer Winkelgeschwindigkeit ($\omega_2$ ; $\omega_3$) bewegt als der Körper (3) in welchen es eingebracht oder einbringbar ist.

10. Lippenlose Spaltdichtung (1) nach Anspruch 5 und 6 oder nach Anspruch 9 **gekennzeichnet dadurch, dass** das Einsatzteil (16) von dem Körper (3) in welchen es eingebracht oder einbringbar ist beabstandet ist mittels Gleitbändern, beispielsweise Gleitbändem aus mineralischen Stoffen oder aus Kunststoff (en), oder mittels Gleitringen, beispielsweise Gleitringen aus Aluminium oder Stahl oder Graphit, oder gar mittels Nadellagerringen.

11. Lippenlose Spaltdichtung (1) nach Anspruch 6 oder nach Anspruch 10 **gekennzeichnet dadurch, dass** Gleit,- Roll,- oder Reibelemente (7 ; 8 ; 9) zwischen dem Einsatzteil (16) und zugehörigem Körper (3) ausgeführt sind als Gleitbänder oder Gleitringe, beispielsweise als Polytetrafluorethylen-Bänder oder Polytetrafluorethylen-Ringe, oder gar als Nadellagerringe.

12. Lippenlose Spaltdichtung (1) nach Anspruch 5 oder 6 oder nach Anspruch 7 **gekennzeichnet dadurch, dass** das Einsatzteil (16) aus gummi- oder kautschukartigem Werkstoff gefertigt ist, vorzugsweise aus gummi- oder kautschukartigem Werkstoff gleicher Härte wie Elastteil (13) oder Befestigungsansatz (11), altemativ aus gummi- oder kautschukartigem Werkstoff höherer Härte.

13. Lippenlose Spaltdichtung (1) nach Anspruch 5 oder 6 oder nach Anspruch 7 **gekennzeichnet dadurch,**

**dass** das Einsatzteil (16) aus andersartigem Werkstoff höherer Härte besteht als Elastteil (13) oder Befestigungsansatz (11), beispielsweise aus Kunststoff(en) oder aus Aluminium oder aus Stahl oder aus Graphit, alternativ aus einem technischen Polyoxymethylen (POM) Kunststoff wie beispielsweise POM-C, oder gar aus Polytetrafluorethylen.

14. Lippenlose Spaltdichtung (1) nach Anspruch 12 **gekennzeichnet dadurch, dass** das Einsatzteil (16) in einem gemeinsamen Herstellverfahren mit Elastteil (13) oder Befestigungsansatz (11) erzeugt wird, beispielsweise während des Extrudierens von gleichen oder unterschiedlichen Materialien in einem gemeinsamen Extrusionswerkzeug.

15. Lippenlose Spaltdichtung (1) nach Anspruch 5 oder 6 oder nach Anspruch 9 oder 10 **gekennzeichnet dadurch, dass** das Einsatzteil (16) gegen axiales Herauslösen gesichert ist, beispielsweise mittels von mindestens einem von Außen angebrachten oder anbringbaren Niederhaltemittel (22), vorzugsweise in Verbindung mit mindestens einem Befestigungsmitteln (23), alternativ mittels der eigenen sich zum Befestigungsansatz (11) hin verjüngenden Formgebung, insbesondere mittels Vieleck- Trapezoder Halbrundform des Einsatzteils (16).

**Geänderte Patentansprüche gemäss Regel 137(2) EPÜ.**

1. Lippenlose Spaltdichtung (1), beispielsweise in Ausprägung eines fixierten und ggfs. mitlaufenden Faltenbalgs, zur Abdichtung eines zwischen einem verdrehbaren ersten Ring (2) und einem verdrehbaren zweiten Ring (3) eines (Groß-)Wälzlagers oder eines Schwenktriebes oder einer Drehverbindung vorhandenen Lagerspaltes (12), wobei das (Groß-) Wälzlagers bzw. der Schwenktrieb bzw. die Drehverbindung mindestens eine Rollen-, Tonnen-, Zylinder-, Nadel-, Kegel- oder Kugelreihe beinhaltet oder gar ausgeführt ist als Kombinationslager oder Vierpunktlager, beispielsweise für den Einsatz in Windkraftanlagen,
**gekennzeichnet durch**:

mindestens einen gelenkigen, vorzugsweise beweglichen, Abschnitt welcher als Elastteil (13) ausgeprägt ist, wobei dieses Elastteil (13) über mindestens einen Elastteil Ansatz (14) oder Schutzfuß (15) mit je einem Eindringansatz (20 ; 21) verbunden ist, wobei ferner mindestens ein Eindringansatz (20 ; 21) zur jeweiligen Fixierung der Spaltdichtung (1) in einem der verdrehbaren Ringe (2 ; 3) oder in einem Einsatzteil (16) gegeben ist,

**2.** Lippenlose Spaltdichtung (1) nach Anspruch 1 **gekennzeichnet dadurch, dass** das Einsatzteil (16), zumindest weitestgehend, von dem zweiten verdrehbaren Ring (3) beinhaltet ist, vorzugsweise unter Zuhilfenahme mindestens eines Niederhaltemittels (22) und/oder Befestigungsmittels (23), wobei das Einsatzteil (16) in diesem Ring (3) zumindest in einer Richtung bewegt werden kann, vorzugsweise mit gleicher Richtung und gleichem Betrag wie sich der erste Ring (2) gegenüber dem zweiten Ring (3) dreht,

beispielsweise sodass gilt: ω Einsatzteil (16) ≠ ω Ring (3).

**3.** Lippenlose Spaltdichtung (1) nach Anspruch 1 oder 2 **gekennzeichnet dadurch, dass** zumindest der Elastteil (13) zugverstärkt ausgeführt ist, beispielsweise faserverstärkt ausgeführt ist, alternativ draht- oder fadenverstärkt ausgeführt ist, gegebenenfalls auch aus einem gegenüber den Eindringansätzen (20 ; 21) zugverstärkten Materialgemisch ausgeführt ist.

**4.** Lippenlose Spaltdichtung (1) nach Anspruch 1 oder 2 **gekennzeichnet dadurch, dass** zumindest einer der Eindringansätze (20 ; 21) die Spaltdichtung an einem der verdrehbaren Körper (2) fixiert und ein weiterer Eindringansatz (21) die Spaltdichtung an einem dem Spalt (12) gegenüber liegendem verdrehbaren Körper (3) fixiert.

**5.** Lippenlose Spaltdichtung (1) nach Anspruch 1 bis 4 **gekennzeichnet dadurch, dass** einer der Eindringansätze (20 ; 21) die Spaltdichtung (1) an einem dem Spalt (12) gegenüber liegendem verdrehbaren Ring (3) fixiert, beispielsweise wobei dieser weitere Eindringansatz (21) in ein Einsatzteil (16) steckbar ist, welches sich gegenüber diesem Körper (3) relativ, gegebenenfalls unter Ausnutzung mindestens einer umlaufenden Kuhle (24), bewegen lässt, wobei diese Kuhle (24) ein giesstechnisch eingearbeiteter Hohlraum oder eine spanend gefertigte Nut ist, alternativ auch in Form einer Mulde, Vertiefung, oder Höhlung.

**6.** Lippenlose Spaltdichtung (1) nach Anspruch 1 bis 5 **gekennzeichnet dadurch, dass** sich das Einsatzteil (16) gegenüber dem Körper in welchen es eingebracht ist oder einbringbar ist, verdrehen lässt, wobei eines oder mehrere Gleit,- Roll,- oder Reibelemente (7 ; 8 ; 9) zwischen Einsatzteil (16) und Ring (3) eingebracht sind, alternativ wobei der Zwischenraum zwischen Einsatzteil (16) und Ring (3) sämtlichen Gleit,- Roll,- oder Reibelemente (7 ; 8 ; 9) entbehrt.

**7.** Lippenlose Spaltdichtung (1) nach Anspruch 1 oder 2 **gekennzeichnet dadurch, dass** die Spaltdichtung im Wesentlichen besteht aus einem kautschukartigen oder kautschukhaltigen Material, alternativ aus einem elastischen Material auf Polyurethanbasis oder aus einem technischen Elastomer, idealerweise jedoch aus vulkanisierbarem Material, beispielsweise aus Viton, FPM, NBR, ECO, HNBR.

**8.** Lippenlose Spaltdichtung (1) nach Anspruch 1 **gekennzeichnet dadurch, dass** sich während Verdrehbewegungen beider gegeneinander verdrehbarer Ringe (2 ; 3) die Spaltdichtung (1) mit der Winkelgeschwindigkeit desjenigen Ringes dreht, in welchen die Spaltdichtung (1) mittels des ersten Eindringansatz (20) eingebracht ist.

**9.** Lippenlose Spaltdichtung (1) nach Anspruch 1 bis 6 oder nach Anspruch 8 **gekennzeichnet dadurch, dass** sich während Verdrehbewegungen beider gegeneinander verdrehbarer Ringe (2 ; 3) das jeweilige Einsatzteil (16) mit anderer Winkelgeschwindigkeit ($\omega_2$; $\omega_3$) bewegt als der Ring (3) in welchen es eingebracht ist.

**10.** Lippenlose Spaltdichtung (1) nach Anspruch 5 und 6 oder nach Anspruch 9 **gekennzeichnet dadurch, dass** das Einsatzteil (16) von dem Ring (3) in welchen es eingebracht ist oder einbringbar ist, beabstandet ist mittels Gleitbändem, beispielsweise Gleitbändern aus mineralischen Stoffen oder aus Kunststoff(en), oder mittels Gleitringen, beispielsweise Gleitringen aus Aluminium oder Stahl oder Graphit, oder gar beabstandet ist mittels Nadellagerelementen.

**11.** Lippenlose Spaltdichtung (1) nach Anspruch 6 oder nach Anspruch 10 **gekennzeichnet dadurch, dass** Gleit,- Roll,- oder Reibelemente (7 ; 8 ; 9) zwischen dem Einsatzteil (16) und zugehörigem Körper (3) ausgeführt sind als Gleitbänder oder Gleitringe, beispielsweise als Polytetrafluorethylen-Bänder oder Polytetrafluorethylen-Ringe, oder gar als Nadellagerelemente.

**12.** Lippenlose Spaltdichtung (1) nach Anspruch 5 oder 6 oder nach Anspruch 7 **gekennzeichnet dadurch, dass** das Einsatzteil (16) aus gummi- oder kautschukartigem Werkstoff gefertigt ist, vorzugsweise aus gummi- oder kautschukartigem Werkstoff gleicher Härte wie Elastteil (13) oder Befestigungsansatz (11), alternativ aus gummi- oder kautschukartigem Werkstoff höherer Härte.

**13.** Lippenlose Spaltdichtung (1) nach Anspruch 5 oder 6 oder nach Anspruch 7 **gekennzeichnet dadurch, dass** das Einsatzteil (16) aus andersartigem Werkstoff höherer Härte besteht als Elastteil (13) oder Befestigungsansatz (11), beispielsweise aus Kunststoff(en) oder aus Aluminium oder aus Stahl oder aus Graphit, alternativ aus einem technischen Polyoxymethylen (POM) Kunststoff wie beispielsweise POM-C, oder gar aus Polytetrafluorethylen.

**14.** Lippenlose Spaltdichtung (1) nach Anspruch 12 **gekennzeichnet dadurch, dass** das Einsatzteil (16) in einem gemeinsamen Herstellverfahren mit Elastteil (13) oder Befestigungsansatz (11) erzeugt wird, beispielsweise während des Extrudierens von gleichen oder unterschiedlichen Materialien in einem gemeinsamen Extrusionswerkzeug.

**15.** Lippenlose Spaltdichtung (1) nach Anspruch 5 oder 6 oder nach Anspruch 9 oder 10 **gekennzeichnet dadurch, dass** das Einsatzteil (16) gegen axiales Herauslösen gesichert ist, vorzugsweise in Verbindung mit mindestens einem Befestigungsmittel (23), alternativ mittels der eigenen sich zum Befestigungsansatz (11) hin verjüngenden Formgebung, insbesondere mittels Vieleck- Trapez- oder Halbrundform des Einsatzteils (16).

**Fig. 1**

**Fig. 2**

**Europäisches Patentamt**
**European Patent Office**
**Office européen des brevets**

# EUROPÄISCHER RECHERCHENBERICHT

**Nummer der Anmeldung**

EP 12 00 5385

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 37 38 111 A1 (SKF GMBH [DE]) 18. Mai 1989 (1989-05-18) * das ganze Dokument * ----- | 1-15 | INV. F16C33/80 F16J15/16 |
| X | WO 2006/019347 A1 (SKF AB [SE]; FALK JOHAN [SE]) 23. Februar 2006 (2006-02-23) * Zusammenfassung * ----- | 1-15 | |
| X | WO 00/04309 A1 (SIEMENS AG [DE]; HAJE DETLEF [DE]) 27. Januar 2000 (2000-01-27) * Zusammenfassung; Abbildungen * ----- | 1-15 | |
| A,D | WO 2007/025683 A1 (IMO MOMENTENLAGER GMBH [DE]; RUSS ERICH [DE]; HUBERTUS FRANK [DE]; WIL) 8. März 2007 (2007-03-08) * das ganze Dokument * ----- | 1-15 | |
| A,D | DE 202 03 372 U1 (IMO IND MOMENTENLAGER STOLL & [DE]) 20. Juni 2002 (2002-06-20) * das ganze Dokument * ----- | 1-15 | **RECHERCHIERTE SACHGEBIETE (IPC)** |
| A,D | DE 10 2006 053832 A1 (IMO MOMENTENLAGER GMBH [DE]) 15. Mai 2008 (2008-05-15) * das ganze Dokument * ----- | 1-15 | F16C F16J |

Der vorliegende Recherchenbericht wurde für alle Patentansprüche erstellt

| Recherchenort | Abschlußdatum der Recherche | Prüfer |
|---|---|---|
| München | 20. Dezember 2012 | Meritano, Luciano |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 00 5385

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2012

| Im Recherchenbericht angeführtes Patentdokument | Datum der Veröffentlichung | Mitglied(er) der Patentfamilie | Datum der Veröffentlichung |
|---|---|---|---|
| DE 3738111 A1 | 18-05-1989 | KEINE | |
| WO 2006019347 A1 | 23-02-2006 | CN 101076677 A | 21-11-2007 |
| | | EP 1875093 A1 | 09-01-2008 |
| | | SE 527314 C2 | 07-02-2006 |
| | | SE 0402046 A | 07-02-2006 |
| | | US 2007292065 A1 | 20-12-2007 |
| | | WO 2006019347 A1 | 23-02-2006 |
| WO 0004309 A1 | 27-01-2000 | CN 1318138 A | 17-10-2001 |
| | | EP 1097325 A1 | 09-05-2001 |
| | | JP 4436566 B2 | 24-03-2010 |
| | | JP 2002520562 A | 09-07-2002 |
| | | US 2001006278 A1 | 05-07-2001 |
| | | WO 0004309 A1 | 27-01-2000 |
| WO 2007025683 A1 | 08-03-2007 | AT 426116 T | 15-04-2009 |
| | | CN 101258345 A | 03-09-2008 |
| | | DK 1920176 T3 | 20-07-2009 |
| | | EP 1920176 A1 | 14-05-2008 |
| | | ES 2324684 T3 | 12-08-2009 |
| | | JP 2009507185 A | 19-02-2009 |
| | | US 2009324153 A1 | 31-12-2009 |
| | | WO 2007025683 A1 | 08-03-2007 |
| DE 20203372 U1 | 20-06-2002 | DE 10309383 A1 | 18-09-2003 |
| | | DE 20203372 U1 | 20-06-2002 |
| DE 102006053832 A1 | 15-05-2008 | DE 102006053832 A1 | 15-05-2008 |
| | | ES 2335168 A1 | 22-03-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1920176 A
- DE 20203372

- DE 102006053832